Europäisches Patentamt

European Patent Office

Office européen des brevets

(19)

(11) **EP 0 986 702 B1**

(12) **EUROPÄISCHE PATENTSCHRIFT**

(45) Veröffentlichungstag und Bekanntmachung des Hinweises auf die Patenterteilung:
**03.07.2002 Patentblatt 2002/27**

(21) Anmeldenummer: **98932003.1**

(22) Anmeldetag: **24.04.1998**

(51) Int Cl.$^7$: **F02D 41/20**, H01L 41/04

(86) Internationale Anmeldenummer:
**PCT/DE98/01155**

(87) Internationale Veröffentlichungsnummer:
**WO 98/55750 (10.12.1998 Gazette 1998/49)**

(54) **VERFAHREN ZUM ANSTEUERN WENIGSTENS EINES KAPAZITIVEN STELLGLIEDES**

METHOD FOR CONTROLLING AT LEAST ONE CAPACITIVE ACTUATING ELEMENT

PROCEDE POUR COMMANDER AU MOINS UN ACTIONNEUR CAPACITIF

(84) Benannte Vertragsstaaten:
**ES FR GB IT**

(30) Priorität: **06.06.1997 DE 19723932**

(43) Veröffentlichungstag der Anmeldung:
**22.03.2000 Patentblatt 2000/12**

(73) Patentinhaber: **SIEMENS AKTIENGESELLSCHAFT 80333 München (DE)**

(72) Erfinder:
• **HOFFMANN, Christian
  D-93057 Regensburg (DE)**
• **FREUDENBERG, Hellmut
  D-93080 Pentling (DE)**
• **GERKEN, Hartmut
  D-93152 Nittendorf (DE)**

• **HECKER, Martin
  D-93336 Laimerstadt (DE)**
• **PIRKL, Richard
  D-93053 Regensburg (DE)**
• **WEIGL, Manfred
  D-93161 Sinzing (DE)**

(56) Entgegenhaltungen:
**EP-A- 0 611 881      DE-A- 3 621 541
US-A- 5 387 834       US-A- 5 543 679**

• **PATENT ABSTRACTS OF JAPAN vol. 018, no. 188 (E-1532), 31. März 1994 & JP 05 344755 A (TOYOTA MOTOR CORP), 24. Dezember 1993**
• **PATENT ABSTRACTS OF JAPAN vol. 017, no. 313 (E-1381), 15. Juni 1993 & JP 05 029676 A (NIPPONDENSO CO LTD), 5. Februar 1993**

**Beschreibung**

Die Erfindung betrifft ein Verfahren zum Ansteuern wenigstens eines kapazitiven Stellgliedes nach dem Oberbegriff des Patentanspruchs 1.

Aus der DE 36 21 541 A1 ist ein Verfahren zum Ansteuern kapazitiver Stellglieder, insbesondere piezoelektrisch betriebener Kraftstoffeinspritzventile einer Brennkraftmaschine, bekannt, nach welchem die Stellglieder mit konstanter Spannung geladen werden.

Ein Piezo-Stellglied besteht aus einer Vielzahl piezokeramischer Schichten und bildet einen sog. "Stack", der bei Anlegen einer Spannung seine Abmessungen, insbesondere seine Länge, verändert, oder bei mechanischem Druck oder Zug eine elektrische Spannung erzeugt.

Die elektrischen Eigenschaften eines derartigen Piezostacks ändern sich mit der Temperatur, der er ausgesetzt ist. Mit steigender Temperatur vergrößert sich seine Kapazität, aber auch der Hub nimmt zu. Bei den für automotive Anwendungen zu berücksichtigenden Temperaturen von etwa -40°C bis +150°C sind dabei Kapazitätsänderungen bis zu einem Faktor 2 zu beobachten.

Wird ein Piezo-Stellglied in allen Betriebspunkten beispielsweise mit konstanter Spannung geladen, die bei niedrigen Temperaturen den benötigten Hub erbringt, so erhält man bei hohen Temperaturen einen Hub, der deutlich größer ist als erforderlich - was bei Kraftstoffeinspritzventilen mit konstantem Kraftstoffdruck eine zu große Kraftstoffeinspritzmenge bedeutet. Da bei hohen Temperaturen die Kapazität des Piezostacks ebenfalls größer ist, wird sehr viel mehr Ladung und Energie benötigt, als erforderlich.

Das aus der DE 36 21 541 A1 bekannte Verfahren arbeitet deshalb nur bei vollständig unveränderten Randbedingungen (keine Toleranzen der verwendeten Bauteile, keine Veränderungen der elektrischen Eigenschaften, konstante Temperatur) hinreichend genau.

Aus der US 5,387,834 ist eine Ansteuerschaltung für ein kapazitives Stellglied bekannt, welches mit einer konstanten Ladespannung und einer in Abhängigkeit von der mittels eines Sensors gemessenen Stellgliedtemperatur bestimmten Aufladedauer angesteuert wird.

Aufgabe der Erfindung ist es, ein Verfahren zum Ansteuern wenigstens eines kapazitiven Stellgliedes anzugeben, welches auch bei Veränderung der Randbedingungen ohne Verwendung eines Temperatursensors hinreichend genau arbeitet.

Diese Aufgabe wird erfindungsgemäß durch die im Anspruch 1 genannten Merkmale gelöst. In den Unteransprüchen sind vorteilhafte Weiterbildungen der Erfindung angegeben.

Untersuchungen haben gezeigt, daß die einem kapazitiven Stellglied zugeführte Energie ein sehr viel präziseres Maß für den Hub ds darstellt als die angelegte Spannung, und daß eine Aufladung mit konstanter Energie über den benötigten Temperaturbereich einen wesentlich konstanteren Hub erbringt. Der Hub ändert sich etwa linear mit der angelegten Spannung bei konstanter Temperatur. Ändert sich die Temperatur, so ändert sich auch der Hub bei gleichbleibender Spannung. Hingegen ändert sich der Hub proportional zum Quadrat der aufgebrachten Energie, jedoch unabhängig von der Temperatur.

Dazu wird aus der dem Stellglied zugeführten Ladung $\Delta Q$ und der nach Beendigung des Aufladevorgangs am Stellglied, beispielsweise P1, gemessenen Spannung $U_p$ die Kapazität $C_p = \Delta Q/U_p$ des Stellgliedes und dann aus $\Delta Q$ und $C_p$ die dem Stellglied zugeführte Energie $E_{ist} = 0{,}5 \cdot C_p \cdot U_p^2 = 0{,}5 \cdot \Delta Q \cdot U_p$ ermittelt. Dieser Wert $E_{ist}$ wird mit einem vorgegebenen Wert $E_{soll}$ verglichen und dem Vergleichsergebnis entsprechend die Ladespannung $U_L$ für den nächsten Ansteuervorgang nachgeregelt ($U_L$ wird vergrößert, wenn $E_{ist} < E_{soll}$, und verkleinert, wenn $E_{ist} > E_{soll}$).

In einem für beliebige Ansteuerschaltungen verwendbaren Verfahren wird die aufgebrachte Ladungsmenge $\Delta Q$ durch Integration des durch das Stellglied während des Aufladevorgangs fließenden Stroms $I_p$ ermittelt. Dann ist

$$\Delta Q = \int I_p dt \rightarrow C_p = \int I_p dt / U_p \rightarrow E_{ist} = 0{,}5 \cdot \int I_p dt \cdot U_p.$$

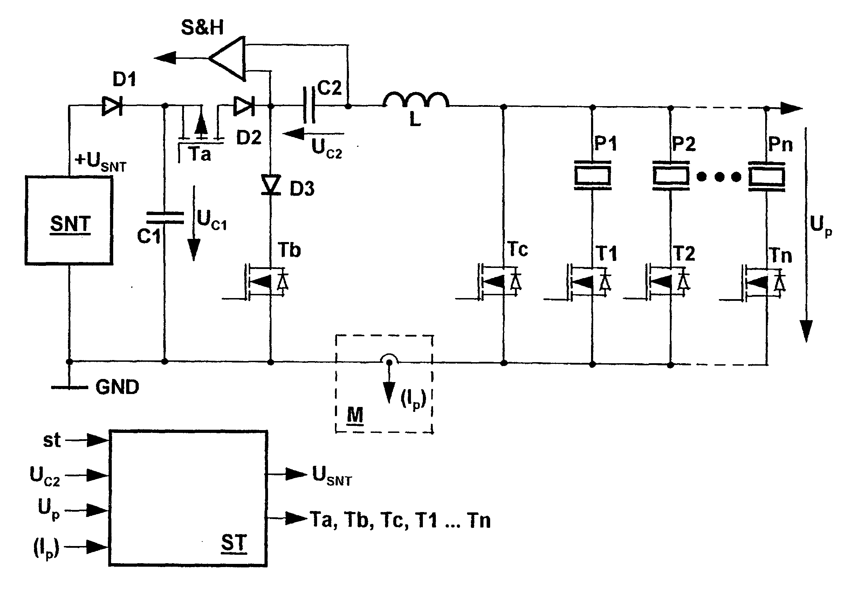

Für Schaltungen mit Lade- und Entladekondensator in Reihenschaltung, wie in der Zeichnung dargestellt, wird erfindungsgemäß ein einfacheres Verfahren für die Ermittlung der dem Stellglied zugeführten Ladungsmenge $\Delta Q$ angegeben, bei dem keine Integration erforderlich ist. Bei diesem Verfahren wird die am Entladekondensator C2 anliegende Spannung einmal vor dem Ladevorgang und dann nach Beendigung des Ladevorgangs gemessen und die Differenz $\Delta U = U_{vor} - U_{nach}$ gebildet und daraus die Ladungsmenge $\Delta Q = C2 \cdot \Delta U = C2 \cdot (U_{vor} - U_{nach})$ errechnet; mit der am Stellglied nach Beendigung des Ladevorgangs anliegenden Spannung Up wird analog zu dem oben angegebenen Verfahren die Stellgliedkapazität $C_p$ und die dem Stellglied zugeführte Energie Energie $E_{ist}$ ermittelt:

$$\Delta Q = C2 \cdot (U_{vor} - U_{nach}) \rightarrow C_p = C2 \cdot (U_{vor} - U_{nach})/U_p \rightarrow$$

$$E_{ist} = 0{,}5 * C2(U_{vor} - U_{nach}) * U_p.$$

Dieser Wert wird, wie bereits oben beschrieben, mit einem vorgegebenen Sollwert $E_{soll}$ verglichen und dem Ergebnis entsprechend die Ladespannung $U_L$ für den nächsten Ansteuervorgang nachgeregelt.

Da die Stellgliedkapazität $C_p$ etwa proportional zur Stellgliedtemperatur $T_p$ ist, kann die berechnete Stellgliedkapazität $C_p$ gemäß der Formel $C_p = \Delta Q/U_p \approx T_p$ zur Bestimmung der Stellgliedtemperatur Tp herangezogen werden und ggf. ein Temperatursensor eingespart werden.

Das erfindungsgemäße Verfahren wird anhand einer aus der Zeichnung ersichtlichen Schaltung zum Ansteuern wenigstens eines kapazitiven Stellgliedes P1 bis Pn für die Betätigung wenigstens eines nicht dargestellten Kraftstoffeinspritzventils mittels einer Steuerschaltung ST, die Teil eines weiter nicht dargestellten mikroprozessorgesteuerten Motorsteuergerätes ist, erläutert.

Zwischen dem Pluspol $+U_{SNT}$ und dem Minuspol GND einer geregelten Spannungsquelle SNT, vorzugsweise eines Schaltnetzteils, ist über eine Diode D1 ein Ladekondensator C1 angeschlossen. Parallel zum Ladekondensator C1 ist eine Reihenschaltung aus einem Ladeschalter Ta, zwei weiteren Dioden D2 und D3 und einem mit dem Minuspol GND verbundenen Entladeschalter Tb angeordnet.

Zwischen dem Verbindungspunkt der beiden Dioden D2 und D3 und dem Masseanschluß GND liegt eine Reihenschaltung aus einem Umladekondensator C2, einer Umschwingspule L, einem ersten Stellglied P1 und einem ersten, gesteuerten Auswahlschalter T1.

Für jedes weitere Stellglied P2 bis Pn ist eine Reihenschaltung aus diesem Stellglied und einem weiteren Auswahlschalter T2 bis Tn der Reihenschaltung aus dem ersten Stellglied P1 und dem ersten Auswahlschalter T1 parallel geschaltet. Die Auswahlschalter, der Entladeschalter Tb und der nachstehend erwähnte Bypaßschalter Tc sind in diesem Ausführungsbeispiel N-Power-MOSFET-Schalter, welche üblicherweise Inversdioden enthalten. Der Ladeschalter Ta ist in diesem Ausführungsbeispiel als P-Power-MOSFET-Schalter ausgebildet.

Außerdem ist ein bereits erwähnter Bypaßschalter Tc vorgesehen, dessen Drainanschluß mit dem Verbindungspunkt zwischen der Umschwingspule L und den Stellgliedern P1 bis Pn verbunden ist, und dessen Sourceanschluß mit dem Sourceanschluß wenigstens des Auswahlschalters T1 verbunden ist. Sämtliche Schalter werden über ihre Gateanschlüsse von den Ausgangssignalen der Steuerschaltung ST gesteuert.

Der parallel zu den Stellgliedern P1 bis Pn angeordnete Bypaßschalter Tc wird von der Steuerschaltung ST angesteuert, wenn die Stellgliedspannung einen vorgegebenen Grenzwert überschreitet oder wenn ein in der Brennkraftmaschine bis hin zu den Leistungsendstufen der Einspritzventile auftretender Fehler erkannt wird, und entlädt die kapazitiven Stellglieder P1 bis Pn kurzschlußartig über die Inversdioden der Auswahlschalter T1 bis Tn. Der Bypaßschalter Tc wird auch zum Aufladen des Entladekondensators C2 vor der ersten Stellgliedbetätigung oder zu dessen Nachladen zwischen zwei zeitlich auseinanderliegenden Stellgliedbetätigungen benötigt. Anstelle des Bypaßschalters Tc kann auch eine Diode oder Zenerdiode mit gleicher Polung wie die Inversdiode des Bypaßschalters vorgesehen sein, wobei dann aber die Aufladung des Entladekondensators C2 über eine Stellgliedbetätigung, bei einem Kraftstoffeinspritzventil vorzugsweise ohne Kraftstoffdruck, vorgenommen werden muß.

Die Schalter Ta, Tb, Tc und T1 bis Tn werden von der Steuerschaltung ST abhängig von Steuersignalen st eines nicht dargestellten Motorsteuergerätes gesteuert. Der Ladekondensator C1 kann als Ausgangskondensator des Schaltnetzteils SNT betrachtet werden.

Nachstehend wird das Ansteuerverfahren für diese Schaltung beschrieben. Während des Betriebes der Schaltung ist der Ladekondensator C1 auf eine von der Steuerschaltung ST bestimmte Ausgangsspannung $+U_{SNT}$ des Schaltnetzteils SNT aufgeladen. Die Bestimmung dieser Spannung $+U_{SNT}$ wird weiter unten erläutert.

Bei Betriebsbeginn wird der Ladekondensator C1 auf $+U_{SNT}$ aufgeladen und ist der Entladekondensator C2 entladen und die Umschwingspule L stromlos. Damit auch der Kondensator C2 vor der ersten Stellgliedbetätigung aufgeladen wird, wird zunächst der Bypaßschalter Tc leitend gesteuert. Dadurch entlädt sich C1 über C2, L und Tc. Sodann wird Tc wieder nichtleitend gesteuert und nun der Entladeschalter Tb leitend gesteuert. Dadurch fließt ein Strom in Gegenrichtung durch L, C2, Tb und die Inversdiode des Bypaßschalters Tc, wodurch C2 aufgeladen und so gepolt wird, daß nach einem oder mehreren Lade- und Entladezyklen an der Reihenschaltung von C1 und C2 die Ladespannung $U_L = U_{C1} + U_{C2}$ anliegt.

Die Spannung $U_{C2}$ am Kondensator C2 wird über eine in diesem Ausführungsbeispiel als Sample-and-Hold-Schaltung S&H ausgebildete Meßschaltung der Steuerschaltung ST mitgeteilt, welche die Ausgangsspannung $+U_{SNT} \approx U_{C1}$ des Schaltnetzteils SNT so einstellt, daß an der Reihenschaltung von C1 und C2 eine vorgegebene Anfangsspannung anliegt.

Da die Spannung $U_{C2}$ am Kondensator C2 bei Nichtbetätigung langsam abfällt, werden auch während des Betriebes, beispielsweise während des Ladevorgangs bei niedrigen Drehzahlen (d.h., bei zeitlich weiter auseinanderliegenden Stellgliedbetätigungen) oder im Schiebebetrieb, solche Nachladungen des Entladekondensators C2 vorgenommen.

Soll eine Stellgliedbetätigung stattfinden, so wird nach dem ersten Verfahren der im Ladekreis fließende Strom $I_p$ mittels einer Meßschaltung M, die im einfachsten Fall aus einem Shuntwiderstand bestehen kann, gemessen und in einem in der Steuerschaltung befindlichen Integrator integriert. Da die Meßschaltung M nur für dieses Verfahren erforderlich ist, ist sie in der Zeichnung strichliert eingerahmt und das Bezugszeichen für den Strom $I_p$ in Klammern gesetzt. Die weitere Durchführung dieses Verfahrens erfolgt wie bei dem nachstehend beschriebenen zweiten Verfahren.

Nach diesem zweiten, einfacheren Verfahren wird vor der Stellgliedaufladung die Spannung $U_{C2} = U_{vor}$ am Entladekondensator C2 gemessen und der Steuerschaltung ST mitgeteilt. Anschließend werden der Ladeschalter Ta und der dem entsprechenden Stellglied, beispielsweise P1, zugeordnete Auswahlschalter T1 leitend gesteuert. Es fließt Strom von SNT und C1 über Ta, C2, L, P1 und T1 nach GND, bis das Stellglied geladen ist. Anschließend werden Ta und T1 nichtleitend gesteuert, das Stellglied ist weiterhin geladen. Nun werden die Spannung $U_{C2} = U_{nach}$ am Entladekondensator C2 und die am Stellglied P1 anliegende Spannung Up gemessen und der Steuerschaltung ST mitgeteilt. Diese errechnet gemäß den oben erläuterten Formeln die dem Stellglied zugeführte Energie $E_{ist}$ und vergleicht diesen Wert mit einem vorgegebenen Sollwert $E_{soll}$. Dementsprechend wird für den nächsten Ansteuervorgang die erforderliche Ladespannung $U_L$ ermittelt. Ist $E_{ist} < E_{soll}$, so wird die Ladespannung $U_L$ gegenüber dem zuvor gültigen Wert beispielsweise schrittweise um einen Schritt erhöht; ist $E_{ist} > E_{soll}$, so wird sie um einen Schritt verkleinert. Die Ladespannung $U_L$ wird auf $E_{ist} = E_{soll}$ geregelt.

Der Ladezustand des Stellgliedes P1 bleibt erhalten, bis nach Verschwinden des Steuersignals st der Entladeschalter Tb leitend gesteuert wird. Bei leitendem Entladeschalter Tb werden alle Stellglieder P1 bis Pn über die Spule L in den Entladekondensator C2 entladen.

Die am Entladekondensator C2 nach dem Entladen des Stellgliedes anliegende Spannung $U_{C2}$ wird über die Sample-and-Hold-Schaltung S&H der Steuerschaltung ST mitgeteilt, welche die Ausgangsspannung $+U_{SNT}$ des Schaltnetzteils SNT so nachsteuert, daß die vorher ermittelte Ladespannung $U_L = U_{C1} + U_{C2}$ beim nächsten Ansteuervorgang erreicht wird. Mit dieser Ladespannung kann dann der nächste Ladevorgang des Stellgliedes P1 bzw. der Ladevorgang des nächsten Stellgliedes P2 erfolgen u.s.w..

**Patentansprüche**

1. Verfahren zum Ansteuern wenigstens eines kapazitiven Stellgliedes (P1 bis Pn) mittels einer Ladespannung ($U_L$), **dadurch gekennzeichnet,**

   **daß** aus der dem Stellglied (P1 bis Pn) zugeführten Ladungsmenge $\Delta Q$ und der nach Beendigung des Ladevorgangs am Stellglied anliegenden Stellgliedspannung Up die Stellgliedkapazität nach der Gleichung $C_p = \Delta Q/U_p$ berechnet wird,
   **daß** aus den Werten Stellgliedkapazität $C_p$ und Stellgliedspannung Up die dem Stellglied während des Ladevorgangs zugeführte Energie $E_{ist}$ nach der Gleichung

   $$E_{ist} = 0{,}5*C_p*U_p^2 = 0{,}5*\Delta Q*U_p$$

   berechnet wird,
   **daß** der zugeführte Energiebetrag $E_{ist}$ mit einem vorgegebenen Sollwert $E_{soll}$ verglichen wird, und
   **daß** die Ladespannung $U_L = U_{C1} + U_{C2}$ für den nächsten Ansteuervorgang um einen vorgegebenen Betrag erhöht wird, wenn der zugeführte Energiebetrag $E_{ist}$ kleiner als der Sollwert $E_{soll}$ ist, oder verkleinert wird, wenn der zugeführte Energiebetrag $E_{ist}$ größer als der Sollwert $E_{soll}$ ist.

2. Verfahren nach Anspruch 1, **dadurch gekennzeichnet,**
   **daß** die dem Stellglied (P1 bis Pn) zugeführte Ladungsmenge $\Delta Q$ durch Integration des während eines Ladevorgangs durch das Stellglied fließenden Stroms $I_p$ nach der Gleichung $\Delta Q = \int I_p dt$ ermittelt wird.

3. Verfahren nach Anspruch 1, **dadurch gekennzeichnet,**
   **daß** bei Schaltungen mit Lade- und Entladekondensator (C1, C2) in Reihenschaltung, bei welchen an den Ladekondensator (C1) eine regelbare Spannung ($+U_{SNT}$) anlegbar ist, die dem Stellglied (P1 bis Pn) zugeführte Ladungsmenge $\Delta Q$ über die Differenz $\Delta U = U_{vor} - U_{nach}$ der am Entladekondensator (C2) vor und nach dem Ladevorgang liegenden Spannungen $U_{vor}$ und $U_{nach}$ und die Kapazität C2 des Entladekondensators nach der Gleichung $\Delta Q = C2*\Delta U = C2*(U_{vor} - U_{nach})$ ermittelt wird.

4. Verfahren nach Anspruch 1, **dadurch gekennzeichnet,**
   **daß** die berechnete Stellgliedkapazität $C_p$ zur Bestimmung der Stellgliedtemperatur $T_p$ herangezogen wird.

**Claims**

1. Method for controlling at least one capacitive actuator (P1 to Pn) by means of a charge voltage ($U_L$), **characterised in that**

   the charge quantity $\Delta Q$ supplied to the actuator (P1 to Pn) and the actuator voltage $U_p$ present at the actuator on completion of the charge procedure are used to calculate the actuator capacity using the equation $C_p = \Delta Q/U_p$,

   the values actuator capacity $C_p$ and actuator voltage $U_p$ are used to calculate the energy $E_{ist}$ supplied to the actuator during the charge procedure using the equation $E_{ist} = 0.5*C_p*U_p^2 = 0.5*\Delta Q*U_p$,

   the amount of energy $E_{ist}$ supplied is compared to a given value $E_{soll}$, and

   the charge voltage $U_L = U_{C1} + U_{C2}$ is increased for the next control procedure by a given amount if the amount of energy $E_{ist}$ supplied is less than the target value $E_{soll}$, or is decreased if the amount of energy supplied $E_{ist}$ is greater than the target value $E_{soll}$.

2. Method according to Claim 1, **characterised in that** the charge quantity $\Delta Q$ supplied to the actuator (P1 to Pn) is determined by integration of the current $I_p$ flowing through the actuator during a charge procedure using the equation $\Delta Q = \int I_p dt$.

3. Method according to Claim 1, **characterised in that** in the case of circuits with a charge and discharge capacitor (C1, C2) connected in series, where an adjustable voltage ($+U_{SNT}$) can be applied to the charge capacitor (C1), the charge quantity $\Delta Q$ supplied to the actuator (P 1 to Pn) is determined by using the difference $\Delta U = U_{vor} - U_{nach}$ of the voltages $U_{vor}$ and $U_{nach}$ present at the discharge capacitor (C2) before and after the charge procedure and the capacity C2 of the discharge capacitor using the equation $\Delta Q = C2*\Delta U = C2*(U_{vor} - U_{nach})$.

4. Method according to Claim 1, **characterised in that** the calculated actuator capacity $C_p$ is used to determine the actuator temperature $T_p$.

**Revendications**

1. Procédé de commande d'au moins un actionneur capacitif (P1 à Pn) à l'aide d'une tension de charge ($U_L$), **caractérisé**

   **en ce que** la capacité de l'actionneur est calculée à partir de la quantité de charge $\Delta Q$ amenée à l'actionneur (P1 à Pn) et de la tension de l'actionneur $U_p$ présente sur l'actionneur à la fin de l'opération de charge, selon l'équation $C_p = \Delta Q / U_p$,
   **en ce que** l'énergie $E_{ist}$ amenée à l'actionneur pendant l'opération de charge est calculée à partir des valeurs de la capacité de l'actionneur $C_p$ et de la tension de l'actionneur $U_p$ selon l'équation

   $$E_{ist} = 0.5 * C_p * U_p^2 = 0,5 * \Delta Q * U_p,$$

   **en ce que** la quantité d'énergie amenée $E_{ist}$ est comparée à une valeur de consigne prédéfinie $E_{soll}$ et
   **en ce que**, pour la prochaine opération de commande, la tension de charge $U_L = U_{C1} + U_{C2}$ est augmentée d'une quantité prédéfinie si la quantité d'énergie amenée $E_{ist}$ est inférieure à la valeur de consigne $E_{soll}$ ou est diminuée si la quantité d'énergie amenée $E_{ist}$ est supérieure à la valeur de consigne $E_{soll}$.

2. Procédé selon la revendication 1, **caractérisé en ce que** la quantité de charge $\Delta Q$ amenée à l'actionneur (P1 à Pn) est déterminée par l'intégration du courant $I_p$ traversant l'actionneur pendant une opération de charge, selon l'équation $\Delta Q = \int I_p dt$.

3. Procédé selon la revendication 1, **caractérisé en ce que** pour des circuits qui présentent des condensateurs de charge et de décharge (C1, C2) montés en série et dans lesquels une tension réglable (+ $U_{SNT}$) peut être appliquée au condensateur de charge (C1), la quantité de charge $\Delta Q$ amenée à l'actionneur (P1 à Pn) est déterminée par la différence $\Delta U = U_{vor} - U_{nach}$ établie entre les tensions $U_{vor}$ et $U_{nach}$ appliquées au condensateur de décharge (C2) avant et après l'opération de charge et la capacité C2 du condensateur de décharge est calculée selon l'équation $\Delta Q = C2 * \Delta U = C2 * (U_{vor} - U_{nach})$.

4. Procédé selon la revendication 1, **caractérisé en ce que** la capacité $C_p$ de l'actionneur est utilisée pour déterminer la température $T_p$ de l'actionneur.